(19) Europäisches Patentamt / European Patent Office / Office européen des brevets

(11) **EP 1 484 835 B1**

(12) **FASCICULE DE BREVET EUROPEEN**

(45) Date de publication et mention de la délivrance du brevet:
**09.03.2016 Bulletin 2016/10**

(51) Int Cl.:
***H02P 29/00*** *(2016.01)*

(21) Numéro de dépôt: **04291356.6**

(22) Date de dépôt: **28.05.2004**

(54) **Procédé et système de régulation du couple électromagnétique instantané, et support d'enregistrement pour la mise en oeuvre du procédé**

Verfahren und System zum Steuern des augenblickligen elektromagnetischen Drehmoments, und Datenträger zum Durchführen des Verfahrens

Method and system for regulating the instantaneous electromagnetic torque, and memory support for carrying out the method

(84) Etats contractants désignés:
**AT BE BG CH CY CZ DE DK EE ES FI FR GB GR HU IE IT LI LU MC NL PL PT RO SE SI SK TR**

(30) Priorité: **02.06.2003 FR 0306634**

(43) Date de publication de la demande:
**08.12.2004 Bulletin 2004/50**

(73) Titulaire: **ALSTOM Transport Technologies 92300 Levallois-Perret (FR)**

(72) Inventeurs:
- **Benchaib, Abdelkrim**
  **78180 Montigny Le Bretonneux (FR)**
- **Thomas, Jean-Luc**
  **77300 Fontainebleau (FR)**
- **Poullain, Serge**
  **91290 Arpajon (FR)**
- **Alacoque, Jean-Claude**
  **69360 Communay (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 0 848 487     EP-A- 1 107 448**

- **OLESCHUK V ET AL: "Synchronized pulsewidth modulation for different control regimes of AC drives" IECON-2002. PROCEEDINGS OF THE 28TH. ANNUAL CONFERENCE OF THE IEEE INDUSTRIAL ELECTRONICS SOCIETY. SEVILLA, SPAIN, NOV. 5 - 8, 2002, ANNUAL CONFERENCE OF THE IEEE INDUSTRIAL ELECTRONICS SOCIETY, NEW YORK, NY : IEEE, US, vol. VOL. 1 OF 4. CONF. 28, 5 novembre 2002 (2002-11-05), pages 1416-1421, XP010632913 ISBN: 0-7803-7474-6**
- **PATENT ABSTRACTS OF JAPAN vol. 1998, no. 01, 30 janvier 1998 (1998-01-30) & JP 9 247953 A (TOSHIBA CORP), 19 septembre 1997 (1997-09-19)**

**Description**

L'invention concerne un procédé et un système de régulation du couple électromagnétique instantané d'une machine électrique tournante polyphasée ainsi qu'un support d'enregistrement d'informations pour mettre en oeuvre ce procédé.

Plus précisément, l'invention concerne un procédé de régulation dans lequel la machine électrique tournante est équipée de bobinages statoriques et/ou rotoriques alimentés par une tension et un courant générés par un onduleur, l'onduleur étant formé d'interrupteurs dont la commutation est commandable, ce procédé comportant :

- une étape de commande de la commutation des interrupteurs de l'onduleur en mettant en oeuvre un processus de modulation de largeur d'impulsions synchrones avec la fréquence du fondamental de la tension générée par l'onduleur, le processus de modulation étant configuré en fonction d'une consigne d'entrée, et
- à chaque instant de régulation, une étape de calcul de la consigne d'entrée, à partir d'une consigne de couple instantané.

Le document JP 09247953 décrit un procédé du type précédent qui permet, lorsque la fréquence de l'onduleur atteint un seuil prédéterminé et que le processus de modulation de largeur d'impulsions est asynchrone, de basculer ce processus de modulation en mode synchrone.

Dans la suite de la description, les termes "moteur" et "couple" désignent respectivement une machine électrique tournante polyphasée et le couple électromagnétique d'une telle machine. De plus, les termes "fondamental" et "harmonique" désignent respectivement la composante sinusoïdale de fréquence la moins élevée d'un signal et les harmoniques de rang supérieur ou égal à deux.

Le terme harmonique n'est donc utilisé ici que pour désigner les harmoniques de rang supérieur ou égal à deux.

Les procédés de régulation du couple instantané d'un moteur sont utilisés dans de nombreux domaines, tels que, par exemple, pour commander des moteurs d'entraînement d'un laminoir.

Il existe de nombreux procédés de découpage, par un onduleur, d'une tension continue pour créer une tension alternative polyphasée. Parmi ceux-ci, les procédés de commande par modulation de largeur d'impulsions, également connus sous le terme anglais de "Pulse Width Modulation" (PWM), sont les plus utilisés. Les modulations de largeur d'impulsions se répartissent en deux familles dites respectivement "asynchrone" et "synchrone".

Les modulations de largeur d'impulsions asynchrones déterminent les instants de commutation des interrupteurs de l'onduleur par l'intersection d'une porteuse à fréquence élevée asynchrone par rapport à la fréquence du fondamental de la tension générée par l'onduleur, et d'une modulante sinusoïdale à la fréquence statorique souhaitée.

Les modulations de largeur d'impulsions synchrones sont, au contraire, synchronisées par rapport à la fréquence du fondamental de la tension générée par l'onduleur. Elles sont définies par des angles définissant les instants et le nombre de commutations pendant chaque période du fondamental de la tension générée. Typiquement, puisque chaque modulation de largeur d'impulsions synchrone correspond à une tension particulière générée par l'onduleur, l'unité de commande est apte à mettre en oeuvre plusieurs types de modulation de largeur d'impulsions synchrone. Ici, chaque type de modulation de largeur d'impulsions synchrone est défini par la valeur particulière des angles utilisés pour la construire. Ainsi, deux modulations de largeur d'impulsions synchrones ayant des valeurs d'angle différentes correspondent chacune à un type différent de modulations de largeur d'impulsions dans la suite de cette description.

Lors du procédé de régulation, l'unité de commande sélectionne le type de modulation de largeur d'impulsions à utiliser en fonction par exemple de l'amplitude de la tension que doit générer l'onduleur.

Pour chaque type de modulation, la valeur des angles utilisés est généralement précalculée pour éliminer certains rangs d'harmoniques prédéfinis, ce qui est l'un des avantages des modulations de largeur d'impulsions synchrones.

Dans le cas des procédés de régulation du couple instantané d'un moteur, le type de modulation est sélectionné notamment en fonction de la consigne de couple instantané. Il a été constaté que pour ces procédés de régulation, les avantages liés à l'utilisation de modulations de largeur d'impulsions synchrones ne se produisent pas ou que partiellement. En effet, malgré que chaque type de modulation soit construit pour éliminer certains rangs d'harmoniques, ceci ne se produit pas ou que partiellement.

L'invention vise donc à remédier à cet inconvénient en proposant un procédé de régulation du couple instantané d'un moteur en mettant en oeuvre un processus de commande par modulation de largeur d'impulsions synchrone tout en conservant les avantages liés à l'utilisation de modulations de largeur d'impulsions asynchrones.

L'invention a donc pour objet un procédé de régulation tel que décrit ci-dessus, caractérisé en ce qu'il comporte une étape de détermination de l'intervalle de temps entre deux instants de régulation successifs de manière à ce que, tant que la consigne de couple instantané est constante, cet intervalle de temps correspond à un multiple entier de la période de l'oscillation du couple instantané de la machine, ladite oscillation étant causée par des harmoniques de rang, supérieur ou égal à deux de la tension et/ou du courant générés par l'onduleur.

Les différents types de modulations sont construits de manière à éliminer certains rangs d'harmoniques de la tension générée par l'onduleur. Toutefois, l'ensemble des harmoniques n'est pas éliminé, ce qui provoque des oscillations du couple instantané. Plus précisément, le couple instantané résulte de la superposition d'un couple fondamental sensiblement constant et créé par le fondamental de tension et d'un couple pulsatoire créé par les harmoniques de la tension. Ce couple pulsatoire oscille plusieurs fois par période du fondamental de tension.

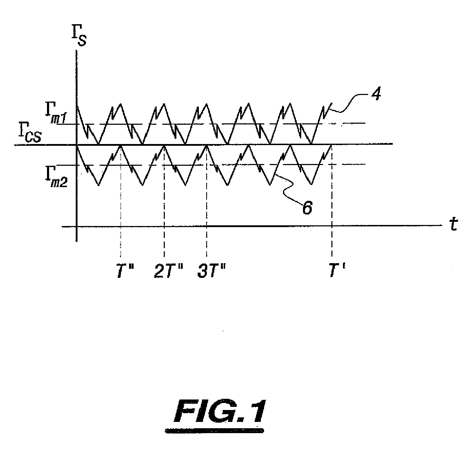

La figure 1 représente l'évolution du couple instantané d'un moteur pendant une période T du fondamental de la tension générée par un onduleur commandé par une modulation de largeur d'impulsions synchrones. Les courbes 4 et 6 représentent l'évolution du couple instantané r, au cours du temps lorsque, respectivement, une première modulation de largeur d'impulsions synchrone MLI1 et une seconde modulation synchrone ML12 différentes sont utilisées. Ces courbes présentent chacune des oscillations autour d'une valeur moyenne représentée respectivement par des axes horizontaux en traits discontinus r et $\Gamma$m2· Pour simplifier l'illustration de la figure 1, les périodes notées T", des oscillations du couple instantané généré par les modulations MLh et ML12 ont été représentées comme identiques. De plus, pour simplifier l'explication qui suit, ces oscillations sont représentées comme étant en phase. La consigne de couple instantané est représentée par la ligne horizontale en trait fin $\Gamma$cs·

Ici, chaque minimum de la courbe 4 et chaque maximum de la courbe 6 sont situés sur la ligne en trait fin $\Gamma_{es}$.

On suppose maintenant que le procédé de régulation est un procédé de régulation mettant en oeuvre une opération de commande à réponse pile de manière à atteindre la consigne de couple instantané dès le prochain instant de régulation.

Pour mieux comprendre pourquoi le procédé ci-dessus résout le problème posé, les causes du problèmes vont être exposées ci-dessous plus en détails en supposant d'abord que l'un des procédés de régulation connus est mis en oeuvre. Dans ce procédé connu, l'intervalle de régulation est choisi de façon arbitraire. Ici, pour simplifier l'explication, on suppose que cet intervalle de régulation choisi arbitrairement correspond à $\dfrac{T''}{2}$.

Dans cette situation, à l'instant 0, le processus de commande à réponse pile sélectionne la modulation MLI$_1$ pour atteindre au prochain instant de régulation la consigne $\Gamma_{es}$·

A l'instant suivant de régulation $\dfrac{T''}{2}$, le processus de commande à réponse pile conduit à sélectionner la modulation MLI$_2$ pour atteindre à l'instant T" la consigne $\Gamma_{es}$·

Dans le cadre purement illustratif de la figure 1, on constate donc que pour une même consigne constante de couple instantané $\Gamma_{es}$, le processus de commande à réponse pile sélectionne en alternance les modulations MLI$_1$ et MLI$_2$. Or, chaque changement de type de modulation créé des harmoniques qui ne peuvent pas être limités par construction des modulations MLI$_1$ et MLI$_2$.

Ceci explique les raisons pour lesquelles les avantages de l'utilisation d'une modulation de largeur d'impulsions synchrones ne sont pas obtenus lorsque celle-ci est mise en oeuvre dans le cadre d'un procédé connu de régulation du couple instantané.

Le procédé ci-dessus propose, pour remédier à cet inconvénient, de déterminer en plus les instants de régulation pour que ceux-ci soient des multiples entiers de la période de l'oscillation du couple instantané causée par les harmoniques de courant et de tension. Ainsi, dans le cas particulier de la figure 1, les instants de régulation sont déterminés comme étant des multiples entiers de la période T. Avec un tel choix, tant que la consigne $\Gamma_{cs}$ est constante, l'opération de commande à réponse pile conduit à sélectionner à chaque instant de régulation la même modulation de largeur d'impulsions ici, par exemple, la modulation MLI$_2$. Dès lors, le nombre de changements de type de modulations est considérablement réduit et chaque type de modulation est sélectionné pendant une temps suffisamment long pour que les harmoniques qui doivent être éliminés le soient.

Suivant d'autres caractéristiques du procédé conforme à l'invention, celui-ci se caractérise en ce que :

- l'étape de calcul comporte un processus de commande à réponse pile de manière à ce que la consigne de couple instantané soit atteinte dès le premier instant de régulation ;
- ledit intervalle est déterminé en outre en fonction de la consigne de couple instantané, de la position et de la vitesse angulaire du rotor de ladite machine ;
- pour une machine synchrone à pôles lisses, ledit intervalle de temps est déterminé à l'aide des relations suivantes

$$\sin\left[k \cdot \frac{\pi}{3} - (\rho_0 + \omega \cdot T + \varphi_D)\right] = e^{-\frac{T}{\tau}} \cdot \frac{\left\|\vec{I}_{dq}^{D}(0)\right\|}{\left\|\vec{I}_{dq}^{D}(T)\right\|} \cdot \sin\left(k \cdot \frac{\pi}{3} - (\rho_0 + \varphi_0)\right)$$

$$\cos(\varphi_D) = \frac{I_d^D(T)}{\left\|\vec{I}_{dq}^D(T)\right\|} \quad \cos(\varphi_0) = \frac{I_d^D(0)}{\left\|\vec{I}_{dq}^D(0)\right\|}$$

$$\sin(\varphi_D) = \frac{I_q^D(T)}{\left\|\vec{I}_{dq}^D(T)\right\|} \quad \sin(\varphi_0) = \frac{I_q^D(0)}{\left\|\vec{I}_{dq}^D(0)\right\|}$$

$$\vec{I}_{dq}^D(T) = \begin{vmatrix} I_d^D(T) \\ I_q^D(T) \end{vmatrix} = \begin{vmatrix} I_d(T) + \dfrac{X^2}{L \cdot Z^2} \cdot \Phi_a \\ I_q(T) + \dfrac{R \cdot X}{L \cdot Z^2} \cdot \Phi_a \end{vmatrix} \quad \vec{I}_{dq}^D(0) = \begin{vmatrix} I_d^D(0) \\ I_q^D(0) \end{vmatrix} = \begin{vmatrix} I_d(0) + \dfrac{X^2}{L \cdot Z^2} \cdot \Phi_a \\ I_q(0) + \dfrac{R \cdot X}{L \cdot Z^2} \cdot \Phi_a \end{vmatrix}$$

où :

- $\Phi_a$ est le flux rotorique prédéfini des aimants,
- L est l'inductance statorique de ladite machine,
- X est défini par la relation $X = L.\omega$ où $\omega$ est la vitesse angulaire du rotor,
- Z est défini par $Z = \sqrt{R^2 + L^2\omega^2}$, où R est la résistance statorique de la machine,
- $I_d(O)$ et $I_q(O)$ sont les composantes du vecteur de courant instantané mesuré à l'instant de régulation, dans un repère tournant d,q lié au flux rotorique, l'axe d étant aligné sur le flux rotorique,
- $I_d(T)$ et $I_q(T)$ sont les composantes d'un vecteur de consigne de courant correspondant à la consigne de couple instantané, dans le repère d,q et
- $\rho_0$ est l'angle entre le repère d,q et un repère $\alpha,\beta$ fixe lié aux bobinages statoriques.
- les instants de régulation sont espacés les uns des autres par un intervalle temporel égal à $\dfrac{T'}{2p}$, où p est le nombre de phases de la machine et T' est la période du fondamental de la tension générée par l'onduleur ;
- les instants de régulation sont choisis pour correspondre exactement à des instants où la phase du fondamental de la tension générée par l'onduleur est égale à $\dfrac{k\pi}{p}$, k étant un nombre entier.
- il comporte une étape de rectification de la consigne de couple instantané lorsque l'intervalle déterminé franchit un seuil prédéfini de temps, cette étape de rectification comportant :

  a) une opération consistant à prendre comme valeur dudit intervalle la valeur du seuil dépassé, et
  b) une opération d'établissement d'une consigne de couple instantané temporaire susceptible d'être atteinte avec la valeur de l'intervalle de temps établi lors de l'opération a ;

- il comporte une étape de rectification de la consigne de couple instantané lorsque la consigne d'entrée à utiliser lors de l'étape de commande franchit une limite prédéfinie de consigne, cette deuxième étape de rectification comportant :

  - une opération d'établissement d'une nouvelle consigne temporaire de couple instantané pour laquelle la limite prédéfinie de consigne est respectée ;
  - la limite prédéfinie de consigne est mesurée à chaque instant de régulation courant.

L'invention a également pour objet un support d'enregistrement d'informations, caractérisé en ce qu'il comporte des instructions pour l'exécution d'un procédé de régulation du couple instantané conforme à l'invention, lorsque ces instructions sont exécutées par un calculateur électronique.

L'invention a également pour objet un système de régulation du couple instantané d'une machine électrique tournante polyphasée équipée de bobinages statoriques et/ou rotoriques alimentés par une tension et un courant générés par un onduleur, l'onduleur étant formé d'interrupteurs dont la commutation est commandable, ce système comportant :

- une unité de commande de la commutation des interrupteurs de l'onduleur apte à mettre en oeuvre un processus de modulation de largeur d'impulsions synchrone avec la fréquence du fondamental de la tension générée par l'onduleur, le processus de modulation étant configuré en fonction d'une consigne d'entrée, et
- une unité de calcul de la consigne d'entrée à partir d'une consigne de couple instantané,

caractérisé en ce qu'il comporte une unité de détermination de l'intervalle de temps entre deux instants de régulation successifs de manière à ce que, tant que la consigne de couple instantané est constante, cet intervalle de temps correspond à un multiple entier de la période de l'oscillation du couple instantané de la machine, ladite oscillation étant causée par des harmoniques de rang supérieur ou égal à deux de la tension et/ou du courant générés par l'onduleur.

L'invention sera mieux comprise à la lecture de la description qui va suivre donnée uniquement à titre d'exemple et faite en se référant aux dessins sur lesquels :

- la figure 1 est un graphique représentant l'évolution du couple instantané en fonction du temps,
- la figure 2 est une illustration schématique d'un système de régulation conforme à l'invention,
- la figure 3 est un graphique représentant l'évolution au cours du temps d'un signal de commande d'un interrupteur généré par le système de la figure 2, et
- la figure 4 est un organigramme d'un procédé de régulation conforme à l'invention.

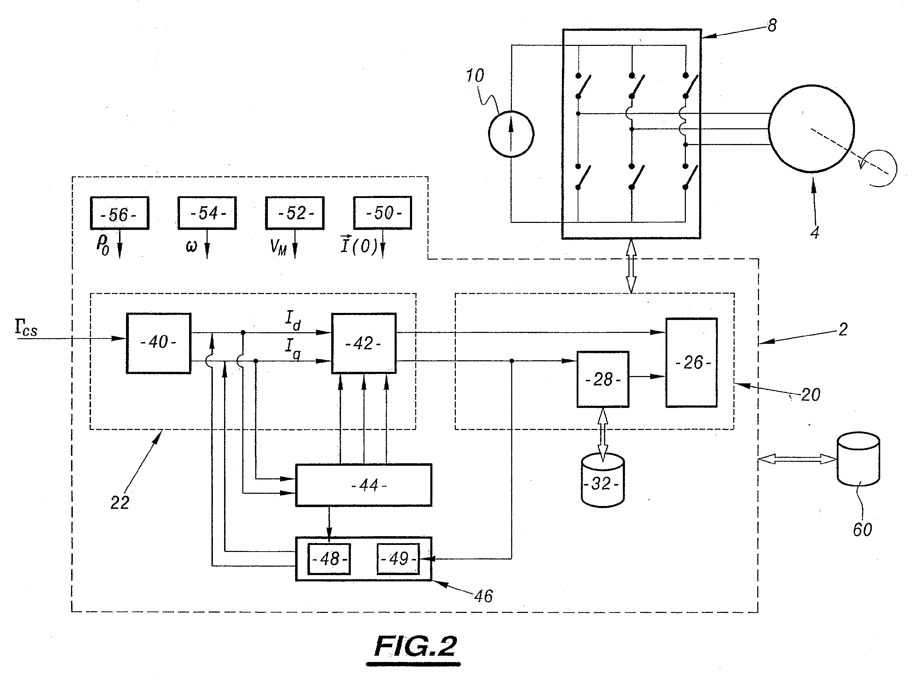

La figure 2 représente un système 2 de régulation du couple électromagnétique instantané d'un moteur 4 équipé d'un stator et d'un rotor. La suite de la description sera faite dans le cas particulier où ce moteur 4 est un moteur triphasé synchrone à pôles lisses à aimants permanents montés en surface du rotor. Le moteur 4 est et équipé de bobinages statoriques.

A cet effet, le système 2 est apte à recevoir en entrée une consigne de couple instantané $\Gamma_{cs}$ et à délivrer en sortie des signaux de commande d'un onduleur triphasé conventionnel 8. Cet onduleur 8 est alimenté par une source 10 de tension continue.

De façon classique, cet onduleur 8 comporte trois bras ou "leg" en anglais, formés chacun de deux interrupteurs raccordés en série par l'intermédiaire d'un point milieu. Le point milieu de chaque bras est raccordé aux bobinages statoriques du moteur 4 de manière à alimenter en tension et en courant chaque phase du moteur.

Le système 2 comporte une unité de commande 20 de l'onduleur 8 en fonction d'une consigne d'entrée et une unité de calcul 22 de cette consigne d'entrée en fonction de la consigne $\Gamma_{cs}$. Ici, la consigne d'entrée est un vecteur de tension $\vec{V}$ défini par son module $\|\vec{V}\|$ et un angle $\beta_0$ dans un repère orthonormé fixe $\alpha,\beta$ lié au stator. L'angle $\beta_0$ est défini par rapport à l'axe $\alpha$ de ce repère. Ce repère est fréquemment utilisé et ne sera pas décrit plus en détail.

L'unité de commande 20 comporte un module 26 de commande de la commutation des interrupteurs de l'onduleur 8, par modulation de largeur d'impulsions et un module 28 de sélection du type de modulation.

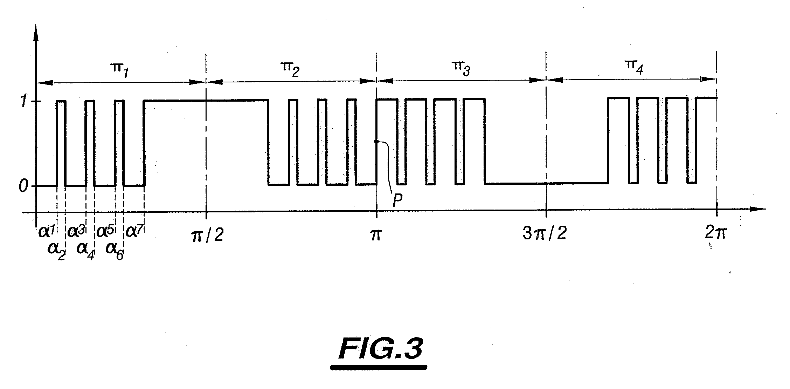

Le module 26 est propre à commander la commutation des interrupteurs de l'onduleur 8 en fonction de la valeur de l'angle $\beta_0$ et d'angles $\alpha_i$ sélectionnés par le module 28. A cet effet, le module 26 met en oeuvre un processus conventionnel de modulation de largeur d'impulsions synchrone avec la fréquence du fondamental de la tension générée par l'onduleur 8. Un exemple de signal de commande généré par ce module 26 est représenté sur la figure 3.

La figure 3 représente l'évolution du signal de commande d'un interrupteur supérieur d'un bras de l'onduleur 8 au cours du temps. Ici, par exemple, la valeur 0 du signal indique que l'ouverture de l'interrupteur est commandée tandis que la valeur 1 indique que la fermeture de l'interrupteur est commandée. La figure 2 représente les instants de régulation en fonction de la phase du fondamental de tension généré par l'onduleur 8. L'intervalle $[0,2\pi]$ est divisé en quatre sous-intervalles égaux $\pi_1$, $\pi_2$, $\pi_3$ et $\pi_4$. Dans l'intervalle $\pi_1$, les instants de commutation de l'interrupteur sont définis par des angles $\alpha_i$. Ici, sept angles $\alpha_i$ sont nécessaires pour définir les commutations de l'interrupteur pendant l'intervalle $\pi_1$ et la modulation de largeur d'impulsions représentée ici est donc dite "sept angles". Les instants de commutation dans les intervalles $\pi_2$ à $\pi_4$ se déduisent de ceux définis pour l'intervalle $\pi_1$ par des transformations classiques. Les signaux de commande des autres interrupteurs se déduisent de celui de la figure 2 en décalant de $\dfrac{2\pi}{p}$ le signal de la figure 2, où p est le nombre de phases du moteur 4.

De manière à éliminer les harmoniques de rang pair et les harmoniques de rang multiple de trois, le signal de commande présente ici deux axes de symétrie aux abscisses $\dfrac{\pi}{2}$ et $\dfrac{3\pi}{2}$ , et un point de symétrie P à l'abscisse $\pi$.

Ainsi, un type de modulation est défini une fois que la valeur des angles $\alpha_i$ est connue.

La valeur des angles $\alpha_i$ fixe le module du fondamental de la tension générée par l'onduleur est donc le couple moyen de l'onduleur.

Le module 28 est apte à sélectionner et à délivrer la valeur des angles $\alpha_i$ correspondant à la valeur du module de tension $\|\vec{V}\|$ reçu en entrée. A cet effet, le module 28 est associé à une mémoire 32 contenant un tableau TP de la forme suivante :

| $\left\|\overrightarrow{\vec{V}}\right\|_1$ | $\alpha_{11}$ | $\alpha_{21}$ | $\alpha_{31}$ | $\alpha_{41}$ | $\alpha_{51}$ | $\alpha_{61}$ | $\alpha_{71}$ |
|---|---|---|---|---|---|---|---|
| $\vdots$ | $\vdots$ | $\vdots$ | $\vdots$ | $\vdots$ | $\vdots$ | $\vdots$ | $\vdots$ |
| $\left\|\overrightarrow{\vec{V}}\right\|_k$ | $\alpha_{1k}$ | $\alpha_{2k}$ | $\alpha_{3k}$ | $\alpha_{4k}$ | $\alpha_{5k}$ | $\alpha_{6k}$ | $\alpha_{7k}$ |
| $\vdots$ | $\vdots$ | $\vdots$ | $\vdots$ | $\vdots$ | $\vdots$ | $\vdots$ | $\vdots$ |
| $\left\|\overrightarrow{\vec{V}}\right\|_m$ | $\alpha_{1m}$ | $\alpha_{2m}$ | $\alpha_{3m}$ | $\alpha_{4m}$ | $\alpha_5 m$ | $\alpha_{6m}$ | $\alpha_{7m}$ |

Ce tableau TP propre à associer à chaque valeur normalisée

$$\left\|\overrightarrow{\vec{V}}\right\|_j$$

du module de tension $\|\vec{V}\|$, ia valeur des angles $\alpha_{ik}$ permettant à l'onduleur 8 de générer une tension dont le module du fondamental est égal au module $\|\vec{V}\|$. La relation permettant de passer de la valeur normalisée du module $\|\vec{V}\|$ à la valeur produite par le module 24 est la suivante :

$$\left\|\overrightarrow{V}\right\| = \left\|\overrightarrow{\vec{V}}\right\| \cdot \hat{V}_M$$

où :

- $\hat{V}_M$ est la valeur instantanée de la tension aux bornes de la source 10.

Si la valeur normalisée

$$\left\|\overrightarrow{\vec{V}}\right\|$$

se situe entre deux valeurs préenregistrées dans le tableau TP, le module de sélection 28 est capable de calculer par interpolation linéaire les valeurs correspondantes des angles $\alpha_i$.

L'unité de calcul 22 comporte un module de conversion 40 et un module 42 de commande à réponse pile.

Le module 40 est propre à convertir de façon conventionnelle la consigne $\Gamma_{cs}$ en une consigne de courant $\vec{I}(T)$. La consigne de courant $\vec{I}(T)$ est ici définie par ses composantes $I_d(T)$ et $I_q(T)$ dans un repère orthonormé d,q tournant, lié au flux rotorique, l'axe d étant aligné sur le flux rotorique. Ce repère d,q est conventionnel, et le passage des coordonnées exprimées dans le repère $\alpha,\beta$ dans celles exprimées dans le repère d,q s'effectue par une simple rotation des axes de référence.

Le module 42 reçoit en entrée les composantes $I_q(T)$ et $I_d(T)$ et délivre en sortie à l'unité 20 les valeurs du

module $\|\vec{V}\|$ et de l'angle $\beta_0$ du vecteur de tension.

Le module 42 est apte à calculer la valeur du vecteur de tension $\vec{V}$ pour qu'au prochain instant de régulation, la consigne de couple instantané correspondant à la consigne $\vec{I}(T)$ soit atteinte. A cet effet, le module 24 met en oeuvre un processus de commande à réponse pile également connu sous les termes anglais de "deadbeat control". Par exemple, ici, le processus mis en oeuvre est décrit dans la demande de brevet EP-A- 123 35 06. On se contentera donc de rappeler que la relation utilisée pour calculer la valeur du vecteur de tension $\vec{V}$ en fonction de la consigne $\vec{I}(T)$ est la suivante :

$$\vec{V}_{dq} = \begin{vmatrix} V_d \\ V_q \end{vmatrix} = \frac{1}{a(T)} \cdot \begin{vmatrix} I_d(T) - I_d^0(T) \\ I_q(T) - I_q^0(T) \end{vmatrix} \qquad (1)$$

dans laquelle :

$$a(T) = \frac{1}{R} \cdot \left( 1 - e^{-\frac{T}{\tau}} \right)$$

et :

$$\begin{vmatrix} I_d^0(T) \\ I_q^0(T) \end{vmatrix}$$

est l'évolution naturelle des courants instantanés du stator du moteur en court-circuit après un intervalle de régulation T à partir de l'état initial du courant statorique à l'instant de mesure et de régulation précédent des courants.

T est l'intervalle de temps entre l'instant de régulation courant et le prochain instant de régulation, R est la résistance statorique du moteur, L est l'inductance statorique du moteur et $\tau$ est la constante de temps statorique

$$\left( \tau = \frac{L}{R} \right).$$

L'angle $\beta_0$ est transmis directement au module 26 de commande tandis que le module $\|\vec{V}\|$ est transmis au module 28 de sélection.

On remarquera que pour établir le vecteur de tension $\vec{V}$, le module 42 a besoin de connaître l'intervalle de temps T entre deux instants de régulation.

A cet effet, le système 2 comporte une unité 44 propre à déterminer la valeur de l'intervalle en fonction de la consigne de courant $\vec{I}(T)$.

Dans le mode de réalisation particulier décrit ici, le système 2 comporte également une unité 46 de rectification de la consigne de couple instantané lorsque celle-ci ne peut pas être atteinte dès le prochain instant de régulation à cause de limitation fonctionnelle du système 2 ou de l'onduleur 8. Plus précisément, l'unité 46 comporte un module 48 de rectification de la consigne de couple instantané lorsque l'intervalle T déterminé par l'unité 44 dépasse des seuils prédéfinis $T_{min}$ et $T_{max}$. L'unité 46 comporte également un module de rectification 49 de la consigne de couple instantanée lorsque le module $\|\vec{V}\|$ délivré par le module 42 dépasse une limite de tension continue maximale prédéfinie $V_M$. A cet effet, l'unité 46 est raccordée à l'unité 44 de manière à connaître la valeur de l'intervalle T et à la sortie du module 42 de manière à connaître la valeur du module $\|\vec{V}\|$. L'unité 46 est également raccordée directement à l'entrée du module 42 de manière à pouvoir fournir à celui-ci une consigne de couple instantané rectifié sous la forme d'une consigne de courant.

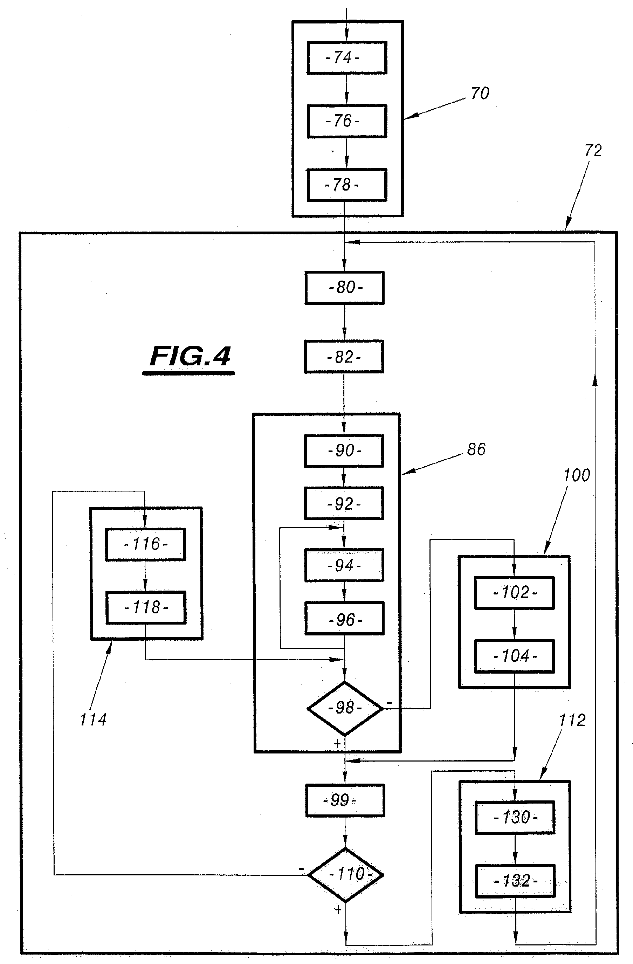

Plus précisément les unités 44 et 46 sont aptes à réaliser les calculs qui seront décrits en regard de la figure 4.

Finalement, le système 2 comporte un capteur 50 du courant $\vec{I}(O)$ dans les bobinages statoriques, un capteur 52 de la tension continue $V_m$ générée par la source 10, un capteur 54 de la vitesse angulaire $\omega$ du rotor du moteur 4, et un capteur 56 de la position angulaire $\rho_o$ du rotor du moteur 4.

Le capteur 50 est formé par plusieurs capteurs de courant élémentaire propres chacun à mesurer le courant dans les bobinages statoriques d'une phase du moteur 4, de manière à mesurer le vecteur de courant instantané. Ce capteur 50 est de plus propre à transformer le vecteur de courant instantané mesuré par la transformation de Concordia généralisée à un système polyphasé, de manière à délivrer en sortie directement les deux composantes du vecteur de courant instantané $I_d(0)$ et $I_q(0)$.

Ces capteurs sont notamment raccordés aux unités 44 et 46. Toutefois, ces raccordements n'ont pas été représentés pour simplifier l'illustration de la figure 2.

Le système 2 est typiquement réalisé à partir d'un calculateur électronique programmable conventionnel apte à exécuter des instructions enregistrées sur un support d'enregistrement d'informations. A cet effet, le système 2 est associé à une mémoire 60 contenant des instructions pour l'exécution du procédé de la figure 4.

Le fonctionnement du système 2 va maintenant être décrit en regard du procédé de la figure 4.

Ce procédé se compose de deux phases principales, une phase d'initialisation 70 suivie d'une phase 72 de régulation.

Lors de la phase 70, les différents types de modulation sont construits lors d'une opération 74 de manière à éliminer certains rangs d'harmoniques prédéterminés. L'opération 74 est par exemple réalisée à l'aide de logiciel de simulation d'un modèle numérique de l'onduleur 8 et du moteur 4. Lors de cette opération 74, la valeur des angles $\alpha_i$ pour chaque type de modulation est déterminée.

A l'issue de l'opération 74, les ensembles de valeurs d'angles $\alpha_i$ déterminés sont enregistrés, lors d'une opération 76, dans la mémoire 32 associée à la valeur normalisée du module $\|\vec{V}\|$ correspondant de manière à former le tableau TP.

Lors de cette phase 70, les différents paramètres constants du moteur 4 sont également déterminés et enregistrés, lors d'une opération 78, dans la mémoire 60. Par exemple, lors de cette opération 70, la valeur de l'inductance statorique L et de la résistance statorique R du moteur ainsi que la valeur du flux $\Phi_a$ est enregistrée dans la mémoire 60.

Une fois la phase d'initialisation terminée, la phase de régulation peut débuter.

A l'instant de régulation courant, l'intensité $\vec{I}(O)$, la tension continue $V_m$, la position angulaire $\rho_o$, et la vitesse angulaire $\omega$ sont mesurées, lors d'une étape 80, respectivement par les capteurs 50, 52, 56 et 54.

Ensuite, le module 40 acquiert la valeur de la consigne de couple instantanée $\Gamma_{cs}$ et convertit, de façon conventionnelle, lors d'une étape 82, cette consigne de couple $\Gamma_{cs}$ en une consigne de courant $\vec{I}(T)$.

L'unité 44 procède alors à une étape 86 de détermination de la valeur de l'intervalle T entre l'instant de régulation courant et le prochain instant de régulation. Cette étape, débute par une opération 90 lors de laquelle l'unité 44 établit la valeur des paramètres $I_d^D(O)$, $I_q^D(O)$, $I_d^D(T)$ et $I_q^D(T)$ à l'aide des relations suivantes :

$$\vec{I}_{dq}^D(T) = \begin{vmatrix} I_d^D(T) \\ I_q^D(T) \end{vmatrix} = \begin{vmatrix} I_d(T) + \dfrac{X^2}{L \cdot Z^2} \cdot \Phi_a \\ I_q(T) + \dfrac{R \cdot X}{L \cdot Z^2} \cdot \Phi_a \end{vmatrix} \qquad \vec{I}_{dq}^D(0) = \begin{vmatrix} I_d^D(0) \\ I_q^D(0) \end{vmatrix} = \begin{vmatrix} I_d(0) + \dfrac{X^2}{L \cdot Z^2} \cdot \Phi_a \\ I_q(0) + \dfrac{R \cdot X}{L \cdot Z^2} \cdot \Phi_a \end{vmatrix} \qquad (2)$$

où :

- $\Phi_a$ est le flux rotorique des aimants,
- L est l'inductance statorique du moteur 4,
- X est défini par la relation $X = L.\omega$, où $\omega$ est la vitesse angulaire mesurée à cet instant de régulation,
- Z est défini par la relation $Z = \sqrt{R^2 + L^2 \cdot \omega^2}$ , où R est la résistance statorique du moteur 4,
- $I_d(O)$ et $I_q(O)$ sont les coordonnées dans le repère d,q du vecteur de courant $\vec{I}(O)$ instantané mesuré par le capteur 50 à cet instant de régulation et,
- $I_d(T)$ et $I_q(T)$ sont les composantes de la consigne de vecteur de courant délivré par le module 40.

A partir de la valeur des paramètres $I_d^D(O)$, $I_q^D(O)$, $I_d^D(T)$ ; $I_q^D(T)$ établis lors de l'opération 90, l'unité 44 établit lors d'une l'opération 92, la valeur des angles $\varphi_d$ et $\varphi_o$ à l'aide des relations suivantes :

$$\cos(\varphi_D) = \frac{I_d^D(T)}{\left\|\vec{I}_{dq}^D(T)\right\|} \qquad \cos(\varphi_0) = \frac{I_d^D(0)}{\left\|\vec{I}_{dq}^D(0)\right\|}$$

$$\sin(\varphi_D) = \frac{I_q^D(T)}{\left\|\vec{I}_{dq}^D(T)\right\|} \quad \sin(\varphi_0) = \frac{I_q^D(0)}{\left\|\vec{I}_{dq}^D(0)\right\|} \quad (17)$$

où le symbole $\|...\|$ représente le module d'un vecteur.

Ci-dessus, il a été expliqué que le couple instantané se décompose en un couple sensiblement constant $\Gamma_m$ et en un couple pulsatoire. Dans ce cas, les modulations de largeur d'impulsions sont construites pour éliminer les harmoniques de rang pair et les harmoniques de rang 3n, où n est un entier, comme ici, il a été établi que la période du couple pulsatoire est T'/2p, où T' est la période du fondamental de la tension générée par l'onduleur et p est le nombre de phases du moteur 4. Plus précisément, il a été constaté que le couple instantané se répète à chaque fois que le vecteur de tension $\vec{V}$ fait un angle $k\pi/p$ avec l'axe $\alpha$ du repère $\alpha,\beta$.

A cet effet, pour déterminer l'intervalle de temps T, il est ajouté au système d'équations de la relation (1) une équation supplémentaire exprimant le fait que la phase du vecteur de tension $\vec{V}$ doit être un multiple de $\dfrac{k \times \pi}{3}$. Par exemple, ceci s'exprime par la relation mathématique suivante :

$$V_\alpha \cdot \sin\left(k \cdot \frac{\pi}{3}\right) - V_\beta \cdot \cos\left(k \cdot \frac{\pi}{3}\right) = 0 \quad (4)$$

où : $V_\alpha$ et $V_\beta$ sont les coordonnées du vecteur de tension $\|\vec{V}\|$ dans le repère $\alpha,\beta$.

On notera que le système d'équations (1) est un système à deux équations et à trois inconnues (T, $V_d$ et $V_q$) et que par conséquent il est toujours possible de trouver une solution à ce système d'équations (1) même en ajoutant une contrainte supplémentaire sur les inconnues $V_d$ et $V_q$.

Une solution analytique du système d'équations (1) auquel a été adjointe la relation (4) s'exprime par la relation suivante :

$$\sin\left[k \cdot \frac{\pi}{3} - (\rho_0 + \omega \cdot T + \varphi_D)\right] = e^{-\frac{T}{\tau}} \cdot \frac{\left\|\vec{I}_{dq}^D(0)\right\|}{\left\|\vec{I}_{dq}^D(T)\right\|} \cdot \sin\left(k \cdot \frac{\pi}{3} - (\rho_0 + \varphi_0)\right) \quad (5)$$

où :

- $\rho_0$ est l'angle du repère d,q par rapport au repère $\alpha, \beta$, cet angle $\rho_0$ étant mesuré par le capteur 56 et,
- k est un entier compris dans l'ensemble {0,1,2,3,4,5}.

Les autres variables de cette relation ont déjà été définies en regard des opérations 90 et 92.

L'unité 44 détermine la valeur de l'intervalle T en résolvant par itérations successives la relation (5). Plus précisément, l'unité 44 fixe, lors d'une opération 94, une valeur initiale $T_s$ pour l'intervalle T et calcule le membre de droite de la relation (5) pour cette valeur $T_s$. Pour obtenir une convergence rapide vers le résultat, la valeur $T_s$ est choisie égale à $1/(6.N_{p \cdot Fm})$ où $N_p$ est le nombre de paires de pôles du moteur 4, et $F_m$ est la fréquence mécanique du rotor du moteur 4 mesurée à partir du capteur 54.

Ensuite, l'unité 44 calcule lors d'une opération 96, la valeur de l'intervalle T pour que le membre de gauche corresponde à la valeur établie pour le membre de droite lors de l'opération 94.

L'unité 44 retourne alors à l'opération 94 en choisissant comme valeur initiale $T_s$ celle établie pour l'intervalle T lors de l'opération 96.

Les opérations 94 et 96 sont ainsi réitérées jusqu'à ce que la valeur de l'intervalle T soit établie avec une précision suffisante.

Ensuite, la valeur de l'intervalle T est comparée, lors d'une opération 98, aux deux seuils de temps $T_{min}$ et $T_{max}$. En-dessous du seuil $T_{min}$, l'intervalle de temps T est trop petit pour que les calculs puissent être réalisés en temps réel. Au-dessus du seuil $T_{max}$, les instants de régulation sont trop espacés les uns des autres ce qui laisse le moteur sans contrôle pendant trop de temps.

Si la valeur de l'intervalle T est comprise entre les deux seuils $T_{min}$ et $T_{max}$, une étape 99 de calcul du module

$\|\vec{V}\|$ et de l'angle $\beta_0$ est exécutée.

Si lors de l'opération de comparaison 98, la valeur de l'intervalle T établie précédemment dépasse l'un de ces seuils, le module 48 procède à une première étape 100 de rectification de la consigne de couple instantané.

Au début de l'étape 100, la valeur de l'intervalle T est fixée, lors d'une opération 102, à la valeur du seuil qui a été dépassé, c'est-à-dire à la valeur du seuil $T_{min}$ ou du seuil $T_{max}$.

Ensuite, lors d'une opération 104, une nouvelle consigne de couple instantanée temporaire, qui puisse être atteinte dans l'intervalle T fixé lors de l'opération 102, est établie. A cet effet, la relation (5) est résolue dans le cas où la valeur de l'intervalle T est celle établie lors de l'opération 102 et en fixant la valeur soit de $I_d$ ($T$) soit de $I_q$ ($T$). Par exemple, dans le cas où l'on cherche à maintenir le couple, la valeur de $I_q$ ($T$) est fixée égale à celle établie par le module 40 tandis que la valeur $I_d$ ($T$) est l'inconnue. La relation (5) s'écrit alors sous la forme :

$$I^D_{d\ k} = \frac{1}{\sin\left[k \cdot \frac{\pi}{3} - \left(\rho_0 + \omega \cdot T_m\right)\right]} \cdot \left\{ I^D_q \cdot \cos\left[k \cdot \frac{\pi}{3} - \left(\rho_0 + \omega \cdot T_m\right)\right] + e^{-\frac{T_m}{\tau}} \left\{ I^D_d(0) \cdot \sin\left(k \cdot \frac{\pi}{3} - \rho_0\right) - I^D_q(0) \cdot \cos\left(k \cdot \frac{\pi}{3} - \rho_0\right) \right\} \right\} \quad (6)$$

où :

- $T_m$ est la valeur de l'intervalle T fixé lors de l'opération 102.

Dans le cas où l'on cherche à maintenir la désexcitation, la valeur de $I_d$ ($T$) est fixée à celle établie par le module 40 et la valeur de $I_q$ ($T$) est établie à l'aide de la relation suivante :

$$I^D_{q\ k} = \frac{1}{\cos\left[k \cdot \frac{\pi}{3} - \left(\rho_0 + \omega \cdot T_m\right)\right]} \cdot \left\{ I^D_d \cdot \sin\left[k \cdot \frac{\pi}{3} - \left(\rho_0 + \omega \cdot T_m\right)\right] - e^{-\frac{T_m}{\tau}} \left\{ I^D_d(0) \cdot \sin\left(k \cdot \frac{\pi}{3} - \rho_0\right) - I^D_q(0) \cdot \cos\left(k \cdot \frac{\pi}{3} - \rho_0\right) \right\} \right\} \quad (7)$$

L'unité 44 résout l'équation (6) ou l'équation (7) en procédant par itérations successives de façon similaire à ce qui a été décrit en regard des opérations 94 et 96.

A l'issue de l'étape 100, le procédé procède à l'étape 99.

Lors de l'étape 99, un processus de commande à réponse pile est mis en oeuvre pour établir le vecteur de tension $\vec{V}$ à partir de la consigne $\vec{I}$ ($T$) et de la valeur de l'intervalle T. Ce processus étant déjà décrit dans le brevet EP A 123 35 06, il ne sera pas décrit en détail ici.

Le module $\|\vec{V}\|$ généré par le module 42 est comparé par l'unité 46, lors d'une étape 110 à la limite de tension $V_M$ mesurée par le capteur 52. Si le module $\|\vec{V}\|$ n'est pas supérieur à la limite $V_M$, le procédé se poursuit par une étape 112 de commande de la commutation des interrupteurs de l'onduleur 8.

Dans le cas contraire, l'unité 46 procède à une seconde étape 114 de rectification de la consigne de couple instantané.

Lors de l'étape 114, une consigne temporaire de couple instantané est calculée. A cet effet, la relation (5) est résolue en tenant compte d'une contrainte supplémentaire selon laquelle un module de tension $\|\vec{V}\|$ ne peut pas être supérieur à la limite $V_M$. Cette contrainte supplémentaire s'exprime par la relation suivante :

$$\left[I^D_d(T) - I^{0D}_d(T)\right]^2 + \left[I^D_q(T) - I^{0D}_q(T)\right]^2 = a(T)^2 \cdot V^2_M \quad (8)$$

où:

- $I_d^{oD}(T)$ et $I_q^{oD}(T)$ représentent l'évolution naturelle du moteur pour une tension nulle et sont définis dans le brevet EP A 123 35 06.

Le système d'équations formé par les relations (5) et (8) peut également s'écrire sous la forme :

$$I_d(T) = \pm a(T) \cdot V_M \cdot \cos\left[k \cdot \frac{\pi}{3} - (\rho_0 + \omega \cdot T)\right] + \frac{-X^2}{L \cdot Z^2} \cdot \Phi_a + e^{-\frac{T}{\tau}} \cdot \left\|\vec{I}_{dq}^D(0)\right\| \cdot \cos(\omega \cdot T - \varphi_0)$$

$$(9)$$

$$I_q(T) = \pm a(T) \cdot V_M \cdot \sin\left[k \cdot \frac{\pi}{3} - (\rho_0 + \omega \cdot T)\right] + \frac{-R \cdot X}{L \cdot Z^2} \cdot \Phi_a - e^{-\frac{T}{\tau}} \cdot \left\|\vec{I}_{dq}^D(0)\right\| \cdot \sin(\omega \cdot T - \varphi_0)$$

Le système d'équations (9) est constitué de deux équations permettant toutes les deux de calculer l'intervalle T à partir de coordonnées du vecteur de consigne de courant $\vec{I}(T)$. Lorsque la limite de tension $V_M$ est atteinte, il n'est plus possible dans le cas général d'imposer $I_q(T)$, $I_d(T)$ et la valeur de l'intervalle T correspondante. Le fait d'atteindre la limite de tension $V_M$ fait donc perdre un degré de liberté. Pour résoudre ce système (9), le module 49 fixe, lors d'une opération 116, l'une des deux composantes du vecteur de courant $\vec{I}(T)$ et calcule l'intervalle de temps T à l'aide de l'une des deux équations du système (9). Puis, lors d'une opération 118, à l'aide de l'autre équation du système 26 et de la valeur d'intervalle T calculée lors de l'opération 116, la valeur de l'autre coordonnée du vecteur de consigne de courant $\vec{I}(T)$ est calculée.

Par exemple, si la valeur de la composante $I_q(T)$ est fixée égale à la valeur appliquée à l'entrée du module 42, la valeur de l'intervalle de temps T est définie par les relations suivantes :

$$T = \frac{1}{\omega} \cdot \left\{ \arccos\left(\frac{I_q^D(T)}{M}\right) + sign(B) \cdot Arc\cos\left(\frac{A}{M}\right) + \varphi_0 - \frac{\pi}{2} \right\} \quad (10)$$

$$A = \pm a(T) \cdot V_M \cdot \cos\left(k \cdot \frac{\pi}{3} - \rho_0 - \varphi_0\right) + e^{-\frac{T}{\tau}} \cdot \left\|\vec{I}_{dq}^D(0)\right\|$$

$$B = \pm a(T) \cdot V_M \cdot \sin\left(k \cdot \frac{\pi}{3} - \rho_0 - \varphi_0\right)$$

$$M = \sqrt{A^2 + B^2}$$

Une autre possibilité consiste à fixer la valeur de la composante $I_d(T)$ et à calculer l'intervalle T à l'aide des relations suivantes :

$$T_n = \frac{1}{\omega} \cdot \left\{ \arccos\left(\frac{I_d^D}{M}\right) + sign(B) \cdot Arc\cos\left(\frac{A}{M}\right) + \varphi_0 \right\} \quad (11)$$

$$A = \pm a(T) \cdot V_M \cdot \cos\left(k \cdot \frac{\pi}{3} - \rho_0 - \varphi_0\right) + e^{-\frac{T}{\tau}} \cdot \left\|\vec{I}_{dq}^{D}(0)\right\|$$

$$B = \pm a(T) \cdot V_M \cdot \sin\left(k \cdot \frac{\pi}{3} - \rho_0 - \varphi_0\right)$$

$$a(T) = \frac{1}{R} \cdot \left(1 - e^{-\frac{T}{\tau}}\right)$$

$$M = \sqrt{A^2 + B^2}$$

A l'issue de l'étape 114, le procédé retourne à l'étape 98 de comparaison de la valeur de l'intervalle T aux seuils $T_{min}$ et $T_{max}$.

Lors de l'étape 112, le module de sélection 28 sélectionne dans la mémoire 32, lors d'une opération 130, la valeur des angles $\alpha_i$ correspondant au module $\|\vec{V}\|$ et délivre ces angles au module 26.

Ensuite, le module 26, lors d'une opération 132, commande la commutation des interrupteurs de l'onduleur 8 en mettant en oeuvre la modulation de largeur d'impulsions définie par les angles $\alpha_i$ reçus.

Jusqu'au prochain instant de régulation, le module 26, continue de commander les interrupteurs de l'onduleur 8 à l'aide du même type de modulation.

A l'issue de l'étape 112 et au prochain instant de régulation, le procédé retourne à l'étape 80.

Ainsi, le procédé ci-dessus ne régule le couple instantané qu'à des instants où la phase du vecteur de tension $\|\vec{V}\|$ fait un angle de $\dfrac{k \times \pi}{3}$ avec l'axe $\alpha$ du repère $\alpha,\beta$. Grâce à cette propriété, le couple instantané n'est régulé qu'à des multiples entiers de la période des oscillations du couple instantané généré par les harmoniques de tension. Comme expliqué en regard de la figure 1, ceci permet de limiter les changements de types de modulation et donc la génération d'harmoniques non contrôlés.

Ainsi, le procédé de la figure 4 combine à la fois les avantages d'un procédé de commande à réponse pile et les avantages liés à l'utilisation de modulation de largeur d'impulsions synchrones. En particulier, ce procédé présentant une grande dynamique tout en permettant de garantir l'absence de certains rangs d'harmoniques.

## Revendications

1. Procédé de régulation du couple électromagnétique instantané d'une machine électrique tournante polyphasée équipée de bobinages statoriques et/ou rotoriques alimentés par une tension et un courant générés par un onduleur, l'onduleur étant formé d'interrupteurs dont la commutation est commandable, ce procédé comportant :

   - une étape (112) de commande de la commutation des interrupteurs de l'onduleur en mettant en oeuvre un processus de modulation de largeur d'impulsions synchrones avec la fréquence du fondamental de la tension générée par l'onduleur, le processus de modulation étant configuré en fonction d'une consigne d'entrée, et,
   - à chaque instant de régulation, une étape (99) de calcul de la consigne d'entrée, à partir d'une consigne de couple instantané,

   **caractérisé en ce qu'**il comporte une étape (86) de détermination de l'intervalle (T) de temps entre deux instants de régulation successifs de manière à ce que, tant que la consigne de couple instantané est constante, cet intervalle de temps corresponde à un multiple entier de la période de l'oscillation du couple instantané de la machine, ladite oscillation étant causée par des harmoniques de rang supérieur ou égal à deux de la tension et/ou du courant générés par l'onduleur.

2. Procédé selon la revendication 1, **caractérisé en ce que** l'étape de calcul comporte un processus de commande à réponse pile de manière à ce que la consigne de couple instantané soit atteinte dès le premier instant de régulation.

3. Procédé selon l'une quelconque des revendications précédentes, pour une machine équipée d'un rotor, **caractérisé en ce que** ledit intervalle est déterminé en outre en fonction de la consigne de couple instantané ($\Gamma_{cs}$), de la position ($\rho_0$) et de la vitesse angulaire ($\omega$) du rotor de ladite machine.

4. Procédé selon la revendication 3, **caractérisé en ce que** pour une machine synchrone à pôles lisses, ledit intervalle de temps (T) est déterminé à l'aide des relations suivantes

$$\sin\left[k\cdot\frac{\pi}{3}-\left(\rho_0+\omega\cdot T+\varphi_D\right)\right]=e^{-\frac{T}{\tau}}\cdot\frac{\left\|\vec{I}_{dq}^{D}(0)\right\|}{\left\|\vec{I}_{dq}^{D}(T)\right\|}\cdot\sin\left(k\cdot\frac{\pi}{3}-\left(\rho_0+\varphi_0\right)\right)$$

$$\cos(\varphi_D)=\frac{I_d^D(T)}{\left\|\vec{I}_{dq}^{D}(T)\right\|}\quad\cos(\varphi_0)=\frac{I_d^D(0)}{\left\|\vec{I}_{dq}^{D}(0)\right\|}$$

$$\sin(\varphi_D)=\frac{I_q^D(T)}{\left\|\vec{I}_{dq}^{D}(T)\right\|}\quad\sin(\varphi_0)=\frac{I_q^D(0)}{\left\|\vec{I}_{dq}^{D}(0)\right\|}$$

$$\vec{I}_{dq}^{D}(T)=\left|\begin{matrix}I_d^D(T)\\I_q^D(T)\end{matrix}\right|=\left|\begin{matrix}I_d(T)+\dfrac{X^2}{L\cdot Z^2}\cdot\Phi_a\\I_q(T)+\dfrac{R\cdot X}{L\cdot Z^2}\cdot\Phi_a\end{matrix}\right|\quad\vec{I}_{dq}^{D}(0)=\left|\begin{matrix}I_d^D(0)\\I_q^D(0)\end{matrix}\right|=\left|\begin{matrix}I_d(0)+\dfrac{X^2}{L\cdot Z^2}\cdot\Phi_a\\I_q(0)+\dfrac{R\cdot X}{L\cdot Z^2}\cdot\Phi_a\end{matrix}\right|$$

où :

- $\Phi_a$ est le flux rotorique prédéfini des aimants,
- L est l'inductance statorique de ladite machine,
- X est défini par la relation $X=L.\omega$ où $\omega$ est la vitesse angulaire du rotor,
- Z est défini par $Z=\sqrt{R^2+L^2\omega^2}$ , où R est la résistance statorique de la machine,
- $I_d(O)$ et $I_q(O)$ sont les composantes du vecteur de courant instantané mesuré à l'instant de régulation, dans un repère tournant d,q lié au flux rotorique, l'axe d étant aligné sur le flux rotorique
- $I_d(T)$ et $I_q(T)$ sont les composantes d'un vecteur de consigne de courant correspondant à la consigne de couple instantané, dans le repère d,q et
- $\rho_0$ est l'angle entre le repère d,q et un repère $\alpha,\beta$ fixe lié aux bobinages statoriques.

5. Procédé selon l'une quelconque des revendications précédentes, **caractérisé en ce que** les instants de régulation sont espacés les uns des autres par un intervalle temporel égal à $\dfrac{T'}{2p}$ , où p est le nombre de phases de la machine et T' est la période du fondamental de la tension générée par l'onduleur.

6. Procédé selon la revendication 5, **caractérisé en ce que** les instants de régulation sont choisis pour correspondre exactement à des instants où la phase du fondamental de la tension générée par l'onduleur est égale à $\dfrac{k\pi}{p}$ , k étant un nombre entier.

**7.** Procédé selon l'une quelconque des revendications précédentes, **caractérisé en ce qu'**il comporte une étape (100) de rectification de la consigne de couple instantané lorsque l'intervalle (T) déterminé franchit un seuil prédéfini de temps, cette étape de rectification comportant :

a) une opération (102) consistant à prendre comme valeur dudit intervalle la valeur du seuil dépassé, et
b) une opération (104) d'établissement d'une consigne de couple instantané temporaire susceptible d'être atteinte avec la valeur de l'intervalle de temps établi lors de l'opération a.

**8.** Procédé selon l'une quelconque des revendications précédentes, **caractérisé en ce qu'**il comporte une étape (114) de rectification de la consigne de couple instantané lorsque la consigne d'entrée à utiliser lors de l'étape de commande (112) franchit une limite prédéfinie de consigne, cette deuxième étape de rectification comportant :

- une opération (118) d'établissement d'une nouvelle consigne temporaire de couple instantané pour laquelle la limite prédéfinie de consigne est respectée.

**9.** Procédé selon la revendication 8, **caractérisé en ce que** la limite prédéfinie de consigne est mesurée (en 80) à chaque instant de régulation courant.

**10.** Support d'enregistrement d'informations (60), **caractérisé en ce qu'**il comporte des instructions pour l'exécution d'un procédé de régulation conforme à l'une quelconque des revendications précédentes, lorsque lesdites instructions sont exécutées par un calculateur électronique.

**11.** Système de régulation du couple électromagnétique instantané d'une machine électrique tournante polyphasée équipée de bobinages statoriques et/ou rotoriques alimentés par une tension et un courant générés par un onduleur, l'onduleur étant formé d'interrupteurs dont la commutation est commandable, ce système comportant :

- une unité (20) de commande de la commutation des interrupteurs de l'onduleur apte à mettre en oeuvre un processus de modulation de largeur d'impulsions synchrone avec la fréquence du fondamental de la tension générée par l'onduleur, le processus de modulation étant configuré en fonction d'une consigne d'entrée, et
- une unité (22) de calcul, à partir d'une consigne de couple instantané de la consigne d'entrée,

**caractérisé en ce qu'**il comporte une unité (44) de détermination de l'intervalle de temps entre deux instants de régulation successifs de manière à ce que, tant que la consigne de couple instantané est constante, cet intervalle de temps correspond à un multiple entier de la période de l'oscillation du couple instantané de la machine, ladite oscillation étant causée par des harmoniques de rang supérieur ou égal à deux de la tension et/ou du courant générés par l'onduleur.

**Patentansprüche**

**1.** Verfahren zum Regeln des aktuellen elektromagnetischen Moments einer drehenden elektrischen Mehrphasenmaschine, ausgestattet mit Statorwicklungen und/oder Rotorwindungen, die von einer von einen Wechselrichter erzeugten Spannung und einem von dem Wechselrichter erzeugten Strom versorgt werden, wobei der Wechselrichter durch Schalter gebildet ist, deren Schalten steuerbar ist, wobei das Verfahren aufweist:

- einen Schritt (112) des Steuerns des Schaltens der Schalter des Wechselrichters beim Durchführen eines Prozesses zur Modulation der Größe von Pulsen synchron mit der Grundfrequenz der von dem Wechselrichter erzeugten Spannung, wobei der Prozess zur Modulation in Abhängigkeit eines Eingangssollwerts konfiguriert ist und
- zu jedem Regelzeitpunkt ein Schritt (99) des Berechnens des Eingangssollwerts ausgehend von einem Sollwert für das aktuelle Moment,

dadurch charakterisiert, dass es einen Schritt (86) des Ermittelns des Zeitintervalls (T) zwischen zwei aufeinanderfolgenden Regelzeitpunkten aufweist, in der Art, dass, solange der Sollwert des aktuellen Moments konstant ist, dieses Zeitintervall einem ganzen Vielfachen der Periode der Oszillation des aktuellen Moments der Maschine entspricht, wobei die Oszillation durch die Harmonischen mit Rang größer oder gleich zwei der von dem Wechselrichter erzeugten Spannung und/oder des von dem Wechselrichter erzeugten Stroms verursacht wird.

2. Verfahren gemäß Anspruch 1, dadurch charakterisiert, dass der Schritt des Berechnens einen Steuerprozess mit exakter Antwort aufweist in der Art, dass der Sollwert des aktuellen Moments nach dem ersten Regelzeitpunkt erreicht wird.

3. Verfahren gemäß einem der vorhergehenden Ansprüchen für eine Maschine, die mit einem Rotor ausgestattet ist, dadurch charakterisiert, dass das Intervall unter anderem in Abhängigkeit des Sollwerts des aktuellen Moments ($\Gamma_{cs}$), der Position ($\rho_0$) und der Winkelgeschwindigkeit $\omega$ des Rotors der Maschine bestimmt wird.

4. Verfahren gemäß Anspruch 3, dadurch charakterisiert, dass für eine Synchronmaschine mit gleichmäßigen Polen das Zeitintervall (T) mit Hilfe der folgenden Beziehungen bestimmt wird

$$\sin\left[k \cdot \frac{\pi}{3} - (\rho_0 + \omega \cdot T + \varphi_D)\right] = e^{-\frac{T}{\tau}} \cdot \frac{\left\|\vec{I}_{dq}^{D}(0)\right\|}{\left\|\vec{I}_{dq}^{D}(T)\right\|} \cdot \sin\left(k \cdot \frac{\pi}{3} - (\rho_0 + \varphi_0)\right)$$

$$\cos(\varphi_D) = \frac{I_d^D(T)}{\left\|\vec{I}_{dq}^D(T)\right\|} \quad \cos(\varphi_0) = \frac{I_d^D(0)}{\left\|\vec{I}_{dq}^D(0)\right\|}$$

$$\sin(\varphi_D) = \frac{I_q^D(T)}{\left\|\vec{I}_{dq}^D(T)\right\|} \quad \sin(\varphi_0) = \frac{I_q^D(0)}{\left\|\vec{I}_{dq}^D(0)\right\|}$$

$$\vec{I}_{dq}^D(T) = \begin{vmatrix} I_d^D(T) \\ I_q^D(T) \end{vmatrix} = \begin{vmatrix} I_d(T) + \dfrac{X^2}{L \cdot Z^2} \cdot \Phi_a \\ I_q(T) + \dfrac{R \cdot X}{L \cdot Z^2} \cdot \Phi_a \end{vmatrix} \quad \vec{I}_{dq}^D(0) = \begin{vmatrix} I_d^D(0) \\ I_q^D(0) \end{vmatrix} = \begin{vmatrix} I_d(0) + \dfrac{X^2}{L \cdot Z^2} \cdot \Phi_a \\ I_q(0) + \dfrac{R \cdot X}{L \cdot Z^2} \cdot \Phi_a \end{vmatrix}$$

wobei:

- $\Phi_a$ der vorgegebene Rotorfluss der Magnete ist,
- L die Statorinduktivität der Maschine ist,
- X durch die Beziehung $X = L.\omega$ definiert ist, wobei $\omega$ die Winkelgeschwindigkeit des Rotors ist,
- Z durch $Z = \sqrt{R^2 + L^2\omega^2}$ definiert ist, wobei R der Statorwiderstand der Maschine ist,
- $I_d(O)$ und $I_q(O)$ die Komponenten des aktuellen Stromvektors, gemessen zum Regelzeitpunkt, in einem rotierenden Koordinatensystem d,q, das mit dem Rotorfluss verknüpft ist, wobei die Achse d auf den Rotorfluss ausgerichtet ist, sind
- $I_d(T)$ und $I_q(T)$ die Komponenten eines Stromsollvektors entsprechend dem Sollwert für das aktuelle Moment in dem Koordinatensystem d,q sind und
- $\rho_0$ der Winkel ist zwischen dem Koordinatensystem d,q und einem Koordinatensystem $\alpha,\beta$ ist, das fest bezüglich den Statorwicklungen ist.

5. Verfahren gemäß einem der vorhergehenden Ansprüche, dadurch charakterisiert, dass die Regelzeitpunkte voneinander durch ein Zeitintervall gleich $\dfrac{T'}{2p}$ getrennt sind, wobei p die Anzahl von Phasen der Maschine ist und T' die Periode der Grundschwindung der von dem Wechselrichter erzeugten Spannung ist.

6. Verfahren gemäß Anspruch 5, dadurch charakterisiert, dass die Regelzeitpunkte gewählt sind, so dass sie exakt den Zeitpunkten entsprechen, zu denen die Phase der Grundschwingung der von dem Wechselrichter erzeugten Spannung gleich $\dfrac{k\pi}{p}$ ist, wobei k eine ganze Zahl ist.

**7.** Verfahren gemäß einem der vorhergehenden Ansprüche, dadurch charakterisiert, dass es einen Schritt (100) zum Korrigieren des Sollwerts des aktuellen Moments aufweist, wenn das ermittelte Intervall (T) eine vordefinierte Zeitschwelle überschreitet, wobei der Schritt des Korrigierens aufweist:

a) eine Operation (102), die darin besteht, dass als Wert für des Intervalls der Wert der überschrittenen Schwelle genommen wird, und
b) eine Operation (104) des Festsetzens eines temporären Sollwerts für das aktuelle Moment, der geeignet ist, mit dem Wert des bei der Operation a festgesetzten Zeitintervalls erreicht zu werden.

**8.** Verfahren gemäß einem der vorhergehenden Ansprüche, dadurch charakterisiert, dass es einen Schritt (114) des Korrigierens des Sollwerts des aktuellen Moments, wenn der Eingangssollwert, der bei dem Schritt des Steuerns (112) zu verwenden ist, eine vordefinierte Sollwertgrenze überschreitet, aufweist, wobei dieser zweite Schritt des Korrigierens aufweist:

- eine Operation (118) des Festsetzens eines neuen temporären Sollwerts für das aktuelle Moment, für den die vordefinierte Sollwertgrenze eingehalten wird.

**9.** Verfahren gemäß Anspruch 8, dadurch charakterisiert, dass die vordefinierte Sollwertgrenze (in 80) zu jedem Zeitpunkt der laufenden Regelung gemessen wird.

**10.** Informationsspeichermedium (60), dadurch charakterisiert, dass es Instruktionen zur Ausführung einer Regelungsprozedur gemäß einem der vorhergehenden Ansprüche aufweist, wenn die Instruktionen von einem elektronischen Rechner ausgeführt werden.

**11.** System zum Regeln des aktuellen elektromagnetischen Moments einer drehenden elektrischen Mehrphasenmaschine, ausgestattet mit Statorwicklungen und/oder Rotorwindungen, die von einer von einen Wechselrichter erzeugten Spannung und einem von dem Wechselrichter erzeugten Strom versorgt werden, wobei der Wechselrichter durch Schalter gebildet ist, deren Schalten steuerbar ist, wobei das Verfahren aufweist:

- eine Einheit (20) des Steuerns des Schaltens der Schalter des Wechselrichters, geeignet zum Durchführen eines Prozesses zur Modulation der Größe von Pulsen synchron mit der Grundfrequenz der von dem Wechselrichter erzeugten Spannung, wobei der Prozess zur Modulation in Abhängigkeit eines Eingangssollwerts konfiguriert ist und
- eine Einheit (22) zum Berechnen des Eingangssollwerts ausgehend von einem Sollwert für das aktuelle Moment, dadurch charakterisiert, dass es eine Einheit (44) des Ermittelns des Zeitintervalls zwischen zwei

aufeinanderfolgenden Regelzeitpunkten aufweist, in der Art, dass, solange der Sollwert des aktuellen Moments konstant ist, dieses Zeitintervall einem ganzen Vielfachen der Periode der Oszillation des aktuellen Moments der Maschine entspricht, wobei die Oszillation durch die Harmonischen mit Rang größer oder gleich zwei der von dem Wechselrichter erzeugten Spannung und/oder des von dem Wechselrichter erzeugten Stroms verursacht wird.

## Claims

**1.** A method of regulating the instantaneous electromagnetic torque of a polyphase rotating electrical machine equipped with stator and/or rotor windings supplied by a voltage and a current generated by an inverter formed of switches whose switching is controllable, said method comprising:

- a step (112) of commanding the switching of said switches of said inverter using a pulse width modulation synchronous with the fundamental frequency of said voltage generated by said inverter, wherein the pulse width modulation is configured as a function of an input set point, and
- at each regulation time, a step (99) of calculating said input set point from an instantaneous torque set point,

**characterized in that** it comprises a step (86) of determining the time interval (T) between two successive regulation times so that, as long as said instantaneous torque set point is constant, that time interval corresponds to an integer multiple of the period of oscillation of said instantaneous torque of said machine caused by second order or higher harmonics of said voltage and/or said current generated by said inverter.

2. A method claimed in claim 1, **characterized in that** said calculation step uses an exact response control method such that said instantaneous torque set point is reached at said first regulation time.

3. A method according to anyone of the preceding claims, for a machine equipped with a rotor, **characterized in that** said interval is further determined as a function of said instantaneous torque set point ($\Gamma_{CS}$), the position ($\rho_0$), and the angular speed ($\omega$) of said rotor of said machine.

4. A method claimed in claim 3, **characterized in that**, for a synchronous machine with smooth poles, said time interval (T) is determined using the following equations:

$$\sin\left[k\cdot\frac{\pi}{3}-\left(\rho_0+\omega\cdot T+\varphi_D\right)\right]=e^{-\frac{T}{\tau}}\cdot\frac{\left\|\vec{I}_{dq}^{D}\left(0\right)\right\|}{\left\|\vec{I}_{dq}^{D}\left(T\right)\right\|}\cdot\sin\left(k\cdot\frac{\pi}{3}-\left(\rho_0+\varphi_0\right)\right)$$

$$\cos\left(\varphi_D\right)=\frac{I_d^{D}\left(T\right)}{\left\|\vec{I}_{dq}^{D}\left(T\right)\right\|}\quad\cos\left(\varphi_0\right)=\frac{I_d^{D}\left(0\right)}{\left\|\vec{I}_{dq}^{D}\left(0\right)\right\|}$$

$$\sin\left(\varphi_D\right)=\frac{I_q^{D}\left(T\right)}{\left\|\vec{I}_{dq}^{D}\left(T\right)\right\|}\quad\sin\left(\varphi_0\right)=\frac{I_q^{D}\left(0\right)}{\left\|\vec{I}_{dq}^{D}\left(0\right)\right\|}$$

$$\vec{I}_{dq}^{D}\left(T\right)=\left|\begin{matrix}I_d^{D}\left(T\right)\\I_q^{D}\left(T\right)\end{matrix}\right|=\left|\begin{matrix}I_d\left(T\right)+\dfrac{X^2}{L\cdot Z^2}\cdot\Phi_a\\I_q\left(T\right)+\dfrac{R\cdot X}{L\cdot Z^2}\cdot\Phi_a\end{matrix}\right|\quad\vec{I}_{dq}^{D}\left(0\right)=\left|\begin{matrix}I_d^{D}\left(0\right)\\I_q^{D}\left(0\right)\end{matrix}\right|=\left|\begin{matrix}I_d\left(0\right)+\dfrac{X^2}{L\cdot Z^2}\cdot\Phi_a\\I_q\left(0\right)+\dfrac{R\cdot X}{L\cdot Z^2}\cdot\Phi_a\end{matrix}\right|$$

in which:

- $\Phi_a$ is the rotor flux of the magnets,
- L is the stator inductance of the motor,
- X is defined by the equation X = L.$\omega$, where $\omega$ is the angular speed of the rotor,
- Z is defined by the equation $Z=\sqrt{R^2+L^2\omega^2}$ , where R is the stator resistance of the machine,
- $I_d(O)$ and $I_q(O)$ are the components of the instantaneous current vector measured at the regulation time in a rotating system of axes d,q fixed with respect to the rotor flux, the d axis being aligned with the rotor flux,
- $I_d(T)$ and $I_q(T)$ are the components of the current vector set point corresponding to the instantaneous torque set point in the system of axes d, q, and
- $\rho_0$ is the angle between the system of axes d, q and a fixed system of axes $\alpha$, $\beta$ that is fixed with respect to the stator windings.

5. A method according to anyone of the preceding claims, **characterised in that** said regulation times are spaced by a time interval equal to T'/2p where p is the number of phases of said machine and T' is the period of said fundamental frequency of said voltage generated by said inverter.

6. A method claimed in claim 5, **characterised in that** said regulation times are chosen to correspond exactly to times at which the phase of said fundamental frequency of said voltage generated by said inverter is equal to k$\Pi$/p, where

k is an integer.

7. A method according to anyone of the preceding claims, **characterised in that** it includes a step (100) of correcting said instantaneous torque set point if the interval (T) determined crosses a predefined time threshold, this correction step comprising:

   a) an operation (102) of taking the value of the threshold that has been crossed as the value of said interval, and
   b) an operation (104) of establishing a temporary instantaneous torque set point that can be reached using the time interval value established during the operation a).

8. A method according to anyone of the preceding claims, **characterised in that** it includes a step (114) of correcting said instantaneous torque set point if the input set point to be used during the control step (112) crosses a predefined set point limit, this second correction step comprising:

   - an operation (118) of establishing a new temporary instantaneous torque set point that complies with the predefined set point limit.

9. A method claimed in claim 8, **characterised in that** said predefined set point limit is measured (80) at each current regulation time.

10. An information storage medium (60), caharacterised in that it comprises instructions for executing a regulation method conforming to any preceding claim when said instructions are executed by an electronic computer.

11. A system for regulating the instantaneous electromagnetic torque of a polyphase rotating electrical machine equipped with stator and/or rotor windings supplied by a voltage and a current generated by an inverter formed of switches whose switching is commandable, said system comprising:

   - a unit (20) to command the switching of said switches of said inverter using a pulse width modulation synchronous with the fundamental frequency of the voltage generated by said inverter wherein the pulse width modulation is configured as a function of an input set point, and
   - a unit (22) to calculate said input set point from an instantaneous torque set point,

   **Characterised in that** it comprises a unit (44) to determine the time interval between two successive regulation times so that, as long as said instantaneous torque set point is constant, that time interval corresponds to an integer multiple of the period of oscillation of the instantaneous torque of said machine caused by second order or higher harmonics of said voltage and/or said current generated by said inverter.

**FIG.1**

**FIG.2**

EP 1 484 835 B1

**FIG.3**

EP 1 484 835 B1

FIG.4

**EP 1 484 835 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 09247953 B

- EP 1233506 A